# EUROPÄISCHE PATENTSCHRIFT

(11) **EP 2 487 003 B1**
(45) Veröffentlichungstag und Bekanntmachung des Hinweises auf die Patenterteilung: **28.09.2016**
(21) Anmeldenummer: 12154570.1
(22) Anmeldetag: 08.02.2012
(51) Int. Cl.: B23K 9/16, B23K 9/173, B23K 9/29, B23K 9/32

(54) **Schweißpistole eines Lichtbogenschweißgerätes**
Welding gun of an arc welding device
Pistolet soudeur d'un appareil de soudure à arc

(30) Priorität: 09.02.2011 DE 202011000296 U
(43) Veröffentlichungstag der Anmeldung: 15.08.2012
(73) Patentinhaber: Dinse G.m.b.H., 22419 Hamburg (DE)
(72) Erfinder: Zander, Peter, 22844 Norderstedt (DE); Mewes, Christopher, 24568 Kaltenkirchen (DE)
(74) Vertreter: Raffay & Fleck

(56) Entgegenhaltungen:
- JP-A- 7 256 462
- JP-A- 9 295 155
- JP-A- 62 038 772
- JP-A- 62 038 773
- JP-A- 2009 142 850

## Beschreibung

Die vorliegende Erfindung betrifft eine Schweißpistole eines Lichtbogenschweißgerätes gemäß dem Oberbegriff des Anspruchs 1.

Beim Lichtbogenschweißen wird mittels eines elektrisch mit hohem Strom gezündeten Lichtbogens ein Schweißdraht aufgeschmolzen und mit ebenfalls mittels des Lichtbogens aufgeschmolzenem Material der zu schweißenden Verbindungsstelle vermengt. Dieses geschieht typischerweise unter Schutzgasatmosphäre, wobei das Schutzgas die Schweißstelle abschirmend um diese herum zugeführt wird und die Schweißstelle umspült. Die Zuführung der Medien wird bei Lichtbogenschweißgeräten über eine Schweißpistole vorgenommen, die einen typischerweise zentral gelegenen Zuführkanal für den Schweißdraht, eine Zuführung für den Schweißstrom sowie eine Gasführung aufweist. An dem im Gebrauch der Schweißstelle zugewandten Schweißende der Schweißpistole befindet sich eine Gasdüse, die dort typischerweise lösbar festgelegt ist. Diese Gasdüse dient der Leitung und Lenkung des Schutzgasstroms, der mit ausreichender Strömungsgeschwindigkeit die Schweißstelle sicher umströmt. Da die Gasdüse unmittelbar am Schweißort eingesetzt wird, ist diese ein typisches Verschleißteil und häufig auszuwechseln. Die Gasdüse ist also typischerweise hülsenförmig ausgebildet mit einer einen Durchlasskanal umgebenden Wand. An einem Anschlussende weist sie die Verbindungsstruktur zum Verbinden mit der Schweißpistole auf, typischerweise ein im Inneren der Wand auf Seite des Durchflusskanals ausgebildetes Innengewinde. Häufig ist die Gasdüse zu dem dem Anschlussende gegenüberliegenden Gasaustrittsende hin verjüngt ausgebildet, zur Fokussierung und Bündelung des austretenden Gasstroms.

Schweißpistolen derartiger Lichtbogenschweißgeräte gibt es dabei sowohl handgehalten für manuell ausgeführte Schweißvorgänge, wie auch für Schweißroboterinstallationen für automatisierte Schweißprozesse.

Beim Schweißen kommt es in einem Bereich unmittelbar unterhalb des Gasaustrittsendes der Gasdüse, in dem sowohl der Schweißdraht als auch das Material der zu verbindenden Werkstücke im Bereich der Verbindungsstelle mit hohem Energieeintrag und sehr schnell aufgeschmolzen wird, typischerweise zu der Bildung von Spritzern geschmolzenen Metalls. Je nach zu schweißendem Material kann diese Spritzerbildung sehr intensiv ausfallen. Hierbei kommt es nun nicht selten vor, dass Spritzer geschmolzenen Metalls von der Schweißstelle aus in das Innere der Gasdüse gelangen, dort bis in den Bereich des Anschlussendes. Wenn sich die Metallspritzer dann in einem Übergangsbereich zwischen dem Schweißende der Schweißpistole und dem Anschlussende der Gasdüse festlegen und dort erstarren, kann es vorkommen, dass dort ähnlich wie bei einem Lötprozess durch die erstarrenden, die beiden Teile Schweißpistole und Gasdüse miteinander verbindenden Metallspritzer eine feste Verbindung entsteht. So kommt es dann dazu, dass die Gasdüse im günstigsten Falle nur mit erhöhtem Kraftaufwand, im schlimmsten Falle überhaupt nicht mehr von der Schweißpistole gelöst werden kann. Dies bedeutet dann aber in einem solchen Fall, in dem die Gasdüse verschlissen ist und eigentlich ausgetauscht werden müsste, dass dann die gesamte Schweißpistole, ein wesentlich hochpreisigeres Teil, entsorgt und ersetzt werden muss.

Versuche, diesem Problem im Stand der Technik zu begegnen, gibt es. So werden heute bei vielen am Markt gängigen Systemen zusätzliche Schutzringe bzw. -hülsen eingesetzt, die häufig aus keramischem Werkstoff bestehen, und die den Verbindungsbereich zwischen dem Anschlussende der Gasdüse und der Schweißpistole überdecken und so vor einer Kontamination mit Metallspritzer schützen sollen. Neben der Tatsache, dass hier ein zusätzliches Bauteil erforderlich ist, welches die Handhabung und den Austausch der Gasdüse komplizierter gestaltet, bei einem Tausch der Gasdüse insbesondere zu platzieren vergessen werden kann, hat sich auch herausgestellt, dass nach wie vor Metallspritzer in den Bereich des Anschlussendes vordringen und dort zu einer Verbindung des Schutzringes bzw. Schutzhülse mit dem umgebenden Material führen können, was wiederum ein Lösen der Gasdüse erschwert.

Aus der JP 09295155 A bzw. der US 3,488,468 sind jeweils Schweißbrenner bekannt, bei denen Gasverteiler durch eine Kombination aus an einer Gasdüse nach innen ausgebildetem Vorsprung und Rücksprung an dem Gasverteiler in einer Position gehalten und festgelegt werden. Dabei liegt der Vorsprung an dem Rücksprung an und drückt den Gasverteiler so in seine Einbauposition. In beiden ist jedoch das Eindringen von Spritzern flüssigen Metalls in den Bereich dieser Verbindung noch möglich und mithin ein "Verschweißen" der dort gegebenen Verbindung mit den oben beschriebenen Nachteilen.

Hier setzt die Erfindung an, der die Aufgabe zugrunde liegt, eine verbesserte Schweißpistole mit einer Gasdüse zu schaffen, die ohne den Aufwand eines zusätzlichen Bauteils in Form eines Schutzringes bzw. einer Schutzhülse und in besonders zuverlässiger Weise ein Vordringen von Metallspritzern in den Bereich des Anschlussendes, insbesondere in den Bereich, in dem die Verbindungsstruktur der Gasdüse an einer Gegenstruktur der Schweißpistole angreift, verhindert.

Diese Aufgabe wird erfindungsgemäß gelöst durch eine Schweißpistole eines Lichtbogenschweißgerätes mit den Merkmalen des Anspruchs 1. Vorteilhafte Weiterbildungen einer solchen Schweißpistole sind in den abhängigen Ansprüchen 2 bis 6 angegeben.

Erfindungsgemäß wird bei der Gasdüse einer Schweißpistole eines Lichtbogenschweißgerätes auf der Innenseite der Wand und in Richtung des Gasaustrittsendes gesehen hinter der Verbindungsstruktur ein durchgehender, umlaufender Vorsprung vorgesehen, der einen gegenüber der Umgebung des Vorsprunges verringerten Querschnitt des Durchlasskanals erbringt. Dieser Vorsprung sitzt vor einem korrespondierenden Rücksprung, der an dem Gasverteiler in Ausströmungsrichtung des Gases gesehen hinter (stromab) der Gasausströmöffnungen ausgebildet ist, überragt und beschattet diesen, ohne ihn jedoch zu berühren.

Dieser Vorsprung sorgt bei an der Schweißpistole angeordneter Gasdüse im Zusammenwirken mit dem Rücksprung an dem Gasverteiler für eine Abriegelung bzw. Abdichtung des in der Richtung des Anschlussendes jenseits des Vorsprunges gelegenen Bereiches, indem er einen gerade verlaufenden Weg in den Bereich des Anschlussendes verbaut. Auf diese Weise wird, insbesondere wenn der Vorsprung und der Rücksprung an der Gasdüse in unmittelbar räumlicher Nähe angeordnet sind, eine Art Labyrinthdichtung und damit eine zuverlässige Abdichtung des rückwärtigen, in Richtung des Anschlussendes gelegenen Teils der Gasdüse bzw. der Verbindungsstruktur sichergestellt, so dass in diesen Bereich keinerlei Spritzer geschmolzenen Metalls vordringen können. Insoweit wird die genaue Lage des umlaufenden Vorsprungs im Inneren der Gasdüse davon abhängen, wie die Gestaltung der Schweißpistole, auf der die Gasdüse Verwendung finden soll, ist. Entscheidend dabei ist, dass der Vorsprung zu einer Verringerung des Querschnittes des Durchlasskanals gegenüber der Umgebung des Vorsprunges führt. Der Vorsprung bildet gleichermaßen eine Einschnürung in dem Durchlasskanal und kann so den abdichtenden Effekt zur Verhinderung des Vordringens von Spritzern geschmolzenen Metalls in Richtung des Anschlussendes und insbesondere der Verbindungsstruktur sicher verhindern. Dadurch, dass der Vorsprung an der Gasdüse den Rücksprung an dem Gasverteiler zwar überdeckt, aber an diesem nicht anliegt, können trotz der Beschattungswirkung des Vorsprunges in diesen Bereich gelangende Spritzer bzw. Tropfen flüssigen Metalls nicht diese beiden Teile miteinander fest verbinden, gleichermaßen verschweißen, sondern lagern sich an nur einem der Teile an, so dass diese nach wie vor einfach voneinander zu trennen sind.

Zusätzlich zu der abdichtenden Wirkung gegenüber Spritzern geschmolzenen Metalls kann der Vorsprung eine weitere Funktion erfüllen, die einen zusätzlichen Vorteil erbringt. Wenn nämlich, wie erfindungsgemäß vorgesehen, der Vorsprung im Inneren der Gasdüse in der Montageposition bei vollständig zusammengefügter Schweißpistole hinsichtlich der Gasströmung stromauf von einer oder mehreren Gasaustrittsöffnungen eines Gasverteilers angeordnet ist, verhindert er zudem einen Rückfluss des Gases zum Anschlussende hin und kann so als Strömungsleiter zum Umlenken der Gasströmung in Richtung der Gasaustrittsendes der Gasdüse wirken. Auch dieses Verhindern einer Rückströmung des Gases führt zusätzlich dazu, das Vordringen von Spitzern geschmolzenen Metalls in den hinteren Bereich der Gasdüse, also zum Anschlussende hin, zu verhindern. Zudem bewirkt es eine effizientere Nutzung des ausströmenden Gases, kann helfen, die Gasmenge pro Zeit zu reduzieren und so den Gasverbrauch zu verringern.

Gemäß einer vorteilhaften Weiterbildung ist der Vorsprung im Querschnitt keil- oder keilstumpfförmig gebildet mit der breiteren Basis an seinem der Innenseite der Wand zugewandten Ende. Ein solchermaßen geformter Vorsprung lässt sich nicht nur fertigungstechnisch vergleichsweise einfach herstellen, er bietet mit seinen schräg verlaufenden Flächen zudem eine gute Abweiserstruktur, die ggf. heranströmende Spritzer bzw. Tropfen geschmolzenen Metalls sicher ableiten und von dem Anschlussende mit der Verbindungsstruktur fernhalten kann. Zudem kann auf der dem Anschlussende zugewandten Seite des Vorsprunges eine schräg verlaufende Fläche entsprechend einer passenden Schrägung des korrespondierenden Rücksprunges des Gasverteilers gebildet sein, die gegenüberliegende Schräge bietet zudem eine gute Gasführung des ausströmenden Schutzgases.

Auch wenn es selbstverständlich möglich ist, den Vorsprung im Inneren der Gasdüse als zunächst separates Teil zu produzieren und dann im Inneren der Gasdüse anzubringen, ist die Produktion wesentlich einfacher und die Gasdüse kostengünstiger herzustellen, wenn ein Vorsprung, wie gemäß einer vorteilhaften Weiterbildung der Erfindung vorgesehen, mit der restlichen Wand einstückig ausgebildet ist.

Auch für die erfindungsgemäße Gasdüse gilt, dass diese vorzugsweise im Querschnitt des Durchlasskanals am Austrittsende gegenüber einem vom Gasaustrittsende in Richtung des Anschlussendes gelegenen Querschnitt des Durchlasskanals verringert ist. Solche Verringerung, die insbesondere einen konisch verjüngten Verlauf aufweisen kann, unterstützt die Bündelung des Schutzgasstromes und damit die effiziente Abschirmung der Schweißstelle von der äußeren Atmosphäre im Betrieb.

Sofern die Gasdüse mit einem am Gasaustrittsende verringerten Querschnitt des Durchlasskanals ausgebildet ist, wird bevorzugt, dass sie nahe dem Anschlussende gelegen einen zylinderförmigen Abschnitt des Durchlasskanals aufweist, im welchen der Vorsprung angeordnet ist. Dadurch behindert der Vorsprung nicht etwa die Bündelung des Schutzgasstromes durch die verjüngte Ausbildung, liegt zudem in einem Bereich, in dem die Dichte der Spritzer abnimmt.

Weitere Vorteile und Merkmale der Erfindung ergeben sich aus der nachfolgenden Beschreibung einer Ausführungsbeispiels anhand der beigefügten Figuren. Dabei zeigen:
- Fig. 1: eine teilweise weggeschnittene Ansicht einer Gasdüse einer erfindungsgemäßen Schweißpistole;
- Fig. 2: eine Seitenansicht einer erfindungsgemäßen Schweißpistole mit einer Gasdüse gemäß Fig. 1, wobei die Darstellung der Gasdüse geschnitten erfolgt zum Zeigen der in deren Inneren gelegenen Teile; und
- Fig. 3: in vergrößerter Darstellung den in Fig. 2 mit III bezeichneten Ausschnitt zur Verdeutlichung des Zusammenwirkens zwischen dem Vorsprung an der Gasdüse und einem entsprechenden Rücksprung an dem Gasverteiler der Schweißpistole.

In den Figuren ist ein Ausführungsbeispiel erfindungsgemäßen Schweißpistole dargestellt. Die Figuren sind schematische Zeichnungen und nicht zwingend maßstabsgerecht. Sie stellen zudem nur eine beispielhaft aufgezeigte Möglichkeit der Verwirklichung der Erfindung dar, die auch in anderen als den hier gezeigten Ausführungsvarianten umgesetzt werden kann.

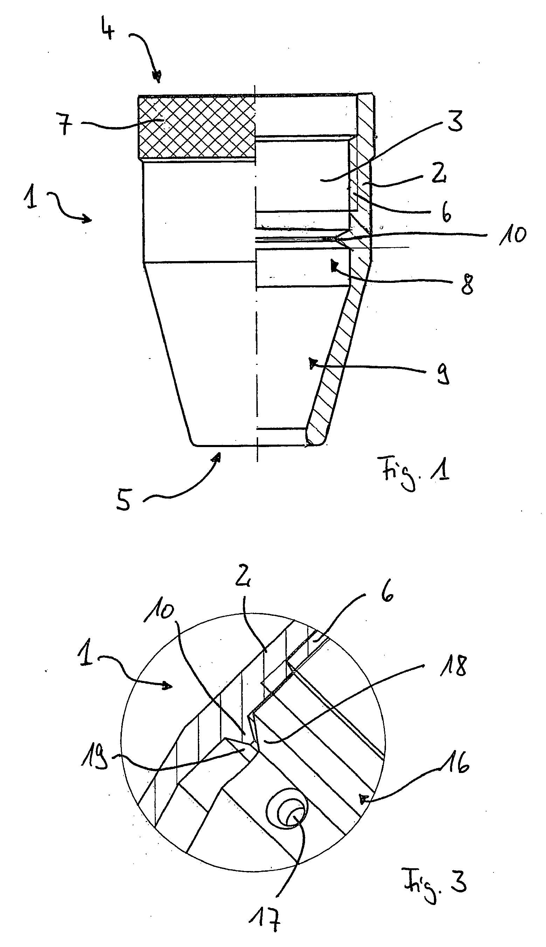

In Fig. 1 ist in teilweise weggeschnittener Darstellung eine Gasdüse 1 einer erfindungsgemäßen Schweißpistole zur Verdeutlichung der daran ausgebildeten erfindungswesentlichen Merkmale gezeigt. Die Gasdüse 1 ist hülsenförmig gebildet mit einer umlaufenden Wand 2, die einen im Inneren der Gasdüse 1 gelegenen Durchlasskanal 3 umfangsseitig umschließt. Die Gasdüse weist ein in der Fig. 1 oben dargestelltes Anschlussende 4 sowie ein dem Anschlussende 4 gegenüberliegendes, in der Fig. 1 unten dargestelltes Gasauslassende 5 auf. An diesen beiden Enden ist der Durchlasskanal 3 jeweils offen.

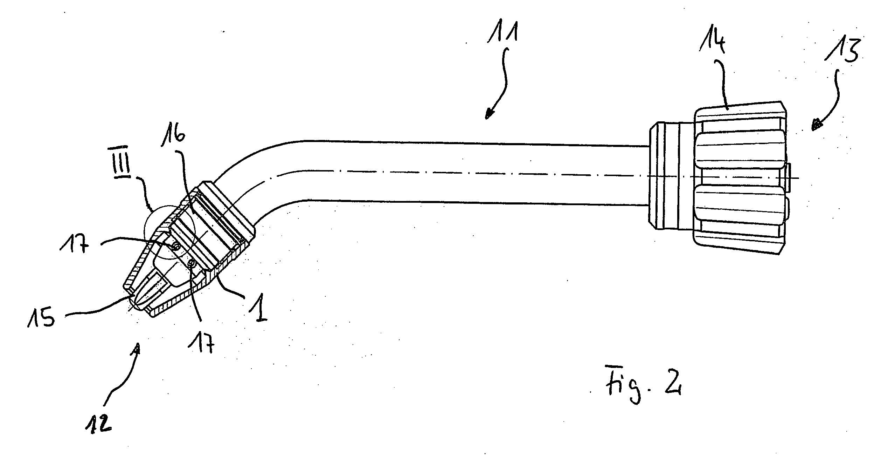

Im Bereich des Anschlussendes 4 ist die Wand 2 im Inneren der Gasdüse 1 mit einem Innengewinde 6 versehen, zum Aufschrauben auf ein entsprechendes, am Schweißende angeordnetes Außengewinde an einer Schweißpistole (vgl. Fig. 2).

Für eine verbesserte Griffigkeit zum Auf- bzw. Abschrauben der Gasdüse 1 auf die bzw. von der Schweißpistole ist auf der Außenseite der Wand 2 im Bereich des Anschlussendes 4 ein gerändelter Bereich 7 vorgesehen.

Ausgehend von dem Anschlussende 4 umfasst der Durchlasskanal 3 zunächst einen zylinderförmigen Abschnitt 8, an den sich in Richtung des Gasauslassendes 5 ein konisch verjüngt zulaufender Abschnitt 9 anschließt.

In den oben beschriebenen Merkmalen entspricht die in Fig. 1 dargestellte Gasdüse 1 im Wesentlichen üblichen aus dem Stand der Technik bekannten Gasdüsen. Erfindungswesentlich ist bei der in Fig. 1 dargestellten erfindungsgemäßen Gasdüse 1 jedoch, dass sie auf der Innenseite der Wand 2 einen in den Durchlasskanal 3 hineinragenden und diesen im Querschnitt im Vergleich zu der Umgebung verkleinernden Vorsprung 10 aufweist, der entlang des gesamten Umfanges durchgehend verläuft. Dieser Vorsprung 10 ist, wie zu erkennen, keilförmig bzw. keilstumpfförmig ausgebildet und in diesem Ausführungsbeispiel einstückig mit der Wand 2 geformt. Er kann z.B. bei der Herstellung der Gasdüse 1 durch spanende Bearbeitung (beispielsweise Drehen) geformt werden.

Dieser Vorsprung 10, der in dem gezeigten Ausführungsbeispiel im Bereich des zylinderförmigen Abschnittes 8 des Durchlasskanals 3 angeordnet ist, befindet sich von dem Anschlussende 4 her gesehen hinter dem Innengewinde 6 und dient dazu, den Bereich des Innengewindes 6 von beim Schweißen entstehenden und in die Gasdüse 1 eindringenden Spritzern geschmolzenen Metalls abzuschirmen. Diese Spritzer laufen gegen die dem Gasauslassende 5 zugewandte Flanke 19 (vgl. Fig. 3) des Vorsprungs 10 an und bleiben dort haften. So wird eine Verunreinigung des Bereiches des Innengewindes 6 mit Metallspritzern vermieden, es kommt insbesondere nicht zu einer festen Verbindung zwischen der Gasdüse 1 und der Schweißpistole in diesem Bereich, die ein Lösen der Gasdüse 1 z.B. bei Verschleiß verhindert.

In Fig. 2 ist in einer Seitenansicht einer erfindungsgemäßen Schweißpistole 11 dargestellt, die an einem Schweißende 12 eine wie in Fig. 1 gezeigte Gasdüse 1 aufgesetzt und angeschraubt enthält. An ihrem dem Schweißende 12 gegenüberliegenden hinteren Ende 13 weist die Schweißpistole 11 in üblicher und bekannter Weise eine Überwurfmutter 14 auf, mit der sie in bekannter Weise an ein entsprechendes Anschlussstück eines Schweißapparates, insbesondere an ein Schlauchpaket, angeschlossen werden kann, wobei am hinteren Ende 13 der Schweißpistole 11 in üblicher Weise Strukturen zum Überführen der Schweißmedien (Schweißdraht, Schweißstrom, Schutzgas) vorhanden sind.

Die Schweißpistole 11 ist also eine solche für ein Lichtbogenschweißgerät.

Im Bereich des Schweißendes 12 ist innerhalb der Gasdüse 1 angeordnet eine zentrale Drahtführung 15, über die zugleich der Schweißstrom geleitet wird. Auf diese zentrale Drahtführung 15 ist ein aus isolierendem Werkstoff typischerweise aus Keramik, bestehender Gasverteiler 16 aufgesetzt, der z.B. durch Verschrauben auf der Drahtführung 15 festgelegt sein kann. Der Gasverteiler 1 6 enthält in einem vorderen, verjüngten Abschnitt Öffnungen 17, durch die entsprechend der radialen Verteilung der Öffnungen 17 das Schutzgas über den Umfang gleichmäßig verteilt ausströmt.

In der Fig. 2 bereits zu erkennen, in Fig. 3 jedoch noch einmal vergrößert dargestellt ist, dass im montierten Zustand die Gasdüse 1 mit dem an der Wand 2 im Inneren ausgebildeten Vorsprung 10 derart nah, aber ohne diesen zu berühren, an einem Rücksprung 18 des Gasverteilers 16 sitzt, dass dort eine Labyrinthdichtung ausgebildet wird, die den rückwärtig gelegenen Bereich, in welchem das Innengewinde 6 angeordnet ist, sicher vor dem Eintritt von Spritzern geschmolzenen Metalls schützt. Die Spritzer werden, sofern sie bis in diesen Bereich vordringen, an der dem Gasauslassende zugewandten Flanke 19 des Vorsprunges 10 abprallen bzw. dort anhaften. Dort können Sie dann allerdings nicht für eine feste Verbindung zwischen der Gasdüse 1 und der Schweißpistole 11 sorgen.

In Fig. 3 lässt sich ein weiterer positiver Effekt der erfindungsgemäßen Gasdüse 1 im Zusammenwirken mit dem Gasverteiler 16 in der Schweißpistole 11 ablesen. So liegen die Öffnungen 17 des Gasverteilers 16 ausgehend von dem Rücksprung 18 desselben in Richtung des Gasauslassendes der Gasdüse 1 versetzt, so auch in dieser Richtung gesehen hinter dem Vorsprung 10. Das durch die Öffnungen 17 austretende Gas wird somit durch die Flanke 19, insbesondere durch deren geneigten Verlauf, abgelenkt und umgeleitet, so dass sich ein verbesserter Gasstrom des Schutzgases in Richtung des Gasauslassendes ergibt, der eine zusätzliche Sicherheit gegen das Eindiffundieren von geschmolzenen Metalltropfen oder -spritzern in den Bereich des Innengewindes 6 bietet und zudem eine sehr gute und sparsame Ausnutzung des Schutzgasstromes gewährleistet.

Aus jedem gezeigten Ausführungsbeispiel sind die Vorteile und Merkmale der Erfindung noch einmal deutlich geworden, wobei noch einmal klar gemacht werden soll, dass das Ausführungsbeispiel keinerlei die allgemeine Erfindung beschränkende Wirkung entfaltet.

### Bezugzeichenliste

- 1: Gasdüse
- 2: Wand
- 3: Durchlasskanal
- 4: Anschlussende
- 5: Gasauslassende
- 6: Innengewinde
- 7: gerändelter Bereich
- 8: zylinderförmiger Abschnitt
- 9: konisch verjüngter Abschnitt
- 10: Vorsprung
- 11: Schweißpistole
- 12: Schweißende
- 13: hinteres Ende
- 14: Überwurfmutter
- 15: Drahtführung
- 16: Gasverteiler
- 17: Öffnung
- 18: Rücksprung
- 19: Flanke

## Patentansprüche

1. Schweißpistole eines Lichtbogenschweißgerätes, welche an einem Schweißende (12) eine mit einer einen Durchlasskanal (3) umgebenden Wand (2) hülsenförmig gebildete Gasdüse (1) und einen in der Gasdüse (1) angeordneten Gasverteiler (16) mit Gasausströmöffnungen (17), wobei die Gasdüse (1) an einem Anschlussende (4) im Innern an der Innenseite der Wand (2) eine Verbindungsstruktur (6), insbesondere ein Innengewinde, zum Verbinden mit einer Gegenstruktur der Schweißpistole (11) und an einem dem Anschlussende (4) gegenüberliegenden Gasaustrittsende (5) aufweist, wobei bei der Gasdüse (1) ferner auf der Innenseite der Wand (2) in Richtung des Gasaustrittsendes (5) gesehen hinter der Verbindungsstruktur (6) ein durchgehender, umlaufender Vorsprung (10) gebildet ist, der einen gegenüber der Umgebung des Vorsprunges (10) verringerten Querschnitt des Durchlasskanals (3) erbringt, und wobei der Gasverteiler (16) in Richtung des Gasaustrittsendes (5) gesehen vor den Gasausströmöffnungen (17) einen korrespondierenden Rücksprung (18) aufweist, **dadurch gekennzeichnet, dass** in montierten Zustand der Vorsprung (10) der Gasdüse den Rücksprung (18) an dem Gasverteiler (16) überragt und beschattet, ohne an diesem anzuliegen.

2. Schweißpistole nach Anspruch 1, **dadurch gekennzeichnet, dass** der Vorsprung (10) im Querschnitt keil- oder keilstumpfförmig verläuft mit der breiteren Basis an seinem der Innenseite der Wand (2) zugewandten Ende.

3. Schweißpistole nach einem der vorhergehenden Ansprüche, **dadurch gekennzeichnet, dass** der Vorsprung (10) einstückig mit der restlichen Wand (2) der Gasdüse (1) ausgebildet ist.

4. Schweißpistole nach einem der vorhergehenden Ansprüche, **dadurch gekennzeichnet, dass** der Querschnitt des Durchlasskanals (3) der Gasdüse (1) am Gasaustrittsende (5) gegenüber einem vom Gasaustrittsende (5) in Richtung des Anschlussendes (4) gelegenen Querschnitt des Durchlasskanals (3) verringert ist.

5. Schweißpistole nach Anspruch 4, **dadurch gekennzeichnet, dass** der Durchlasskanal (3) der Gasdüse (1) in Richtung des Gasaustrittsendes (5) konisch verjüngt zuläuft.

6. Schweißpistole nach einem der Ansprüche 4 oder 5, **gekennzeichnet durch** einen nahe dem Anschlussende (4) der Gasdüse (1) gelegenen zylinderförmigen Abschnitt (8) des Durchlasskanals (3), in welchem der Vorsprung (10) angeordnet ist.

## Claims

1. A welding gun for an arc welding device, comprising at a welding end (12) a gas nozzle in the form of a sleeve with a wall (2) surrounding a flow-through channel (3) and gas distributor (16) arranged in the gas nozzle (1) with gas outflow openings (17), wherein the gas nozzle (1) has at a connecting end (4) inside the internal side of the wall (2) a linking structure (6), in particular an internal thread, for linking to a counter-structure of the welding gun (11) and at a gas exit end (5) facing the connecting end (4), wherein a continuous, circumferential protrusion (10) is formed at the gas nozzle (1) further on the internal side of the wall (2) seen in direction of the gas exit end (5) behind the linking structure (6), which protrusion causes reduction of the cross-section of the flow-through channel (3) with respect to the surrounding of the protrusion (10) and wherein the gas distributor (16) seen in direction of the gas exit end (5) has a corresponding recess before the gas outflow openings (17), **characterised in that** in installed condition the protrusion (10) of the gas nozzle extends beyond and cover the recess (18) at the gas distributor, without leaning against it.

2. The welding gun according to claim 1, **characterised in that** the protrusion (10) extends in its cross-section in the form of a wedge or of a blunt wedge with the wider base at its end facing the internal side of the wall (2).

3. The welding gun according to any of the preceding claims, **characterised in that** the protrusion (10) is designed as a single piece with the rest of the wall (2) of the gas nozzle (1).

4. The welding gun according to any of the preceding claims, **characterised in that** the cross-section of the flow-through channel (3) of the gas nozzle (1) at the gas exit end (5) is reduced with respect to a cross-section of the flow-through channel (3) situated in direction of the connecting end (4) from the gas exit end (5).

5. The welding gun according to claim 4, **characterised in that** the flow-through channel (3) of the gas nozzle (1) is tapered conically in direction of the gas exit end (5).

6. The welding gun according to one of the claims 4 or 5, **characterised by** a cylindrical section (8) of the flow-through channel (3), situated close to the connecting end (4) of the gas nozzle (1) and where the protrusion (10) is arranged.

## Revendications

1. Pistolet soudeur pour un appareil de soudure à l'arc, comprenant en une extrémité de soudure (12) une buse de gaz sous forme d'un manchon avec une paroi (2) entourant un canal à débit continu (3) et un distributeur de gaz (16) disposé dans la buse de gaz (1) avec des orifices d'écoulement du gaz (17), où la buse de gaz (1) possède une extrémité de connexion (4) à l'intérieur de la face interne de la paroi (2) une structure de liaison (6), en particulier un filetage interne, pour liaison avec une contre-structure du pistolet soudeur (11) et à une extrémité de sortie de gaz (5) orientée vers l'extrémité de connexion (4), où une protubérance continue, circonférentielle (10) est formée à la buse de gaz (1) en outre sur la face interne de la paroi (2) vue dans le sens de l'extrémité de sortie de gaz (5) derrière la structure de liaison (6), laquelle protubérance entraîne une réduction de la section transversale du canal à débit continu (3) par rapport l'entourage de la protubérance (10) et où le distributeur de gaz (16) vu dans le sens de l'extrémité de sortie de gaz (5) présente un évidement correspondant devant les orifices d'écoulement du gaz (17), **caractérisé en ce qu'**une fois l'installation effectuée, la protubérance (10) de la buse du gaz s'étend au-delà et recouvre l'évidement (18) au niveau du distributeur de gaz, sans s'appuyer sur elle.

2. Pistolet soudeur selon la revendication 1, **caractérisé en ce que** la protubérance (10) s'étend dans sa section transversale sous de coin ou de coin émoussé avec une plus large base située à son extrémité orientée vers la face interne de la paroi (2).

3. Pistolet soudeur selon l'une quelconque des revendications précédentes, **caractérisé en ce que** la protubérance (10) est conçue d'une seule pièce avec le reste de la paroi (2) de la buse de gaz (1).

4. Pistolet soudeur selon l'une quelconque des revendications précédentes, **caractérisé en ce que** la section transversale du canal à débit continu (3) de la buse de gaz (1) à l'extrémité de sortie de gaz (5) est réduite par rapport à une section transversale du canal à débit continu (3) situé dans la directin de l'extrémité de connexion (4) à partir de l'extrémité de sortie de gaz (5).

5. Pistolet soudeur selon la revendication 4, **caractérisé en ce que** le canal à débit continu (3) de la buse de gaz (1) va rétrécissant de manière conique dans la direction de l'extrémité de sortie de gaz (5).

6. Pistolet soudeur selon l'une quelconque des revendications 4 ou 5, **caractérisé par** une section cylindrique (8) du canal à débit continu (3), situé à proximité de l'extrémité de connexion (4) de la buse de gaz (1) et où la protubérance (10) est agencée.
